# EUROPEAN PATENT SPECIFICATION

(11) **EP 1 812 779 B1**
(45) Date of publication and mention of the grant of the patent: **29.06.2011**
(21) Application number: 05800080.3
(22) Date of filing: 01.11.2005
(51) Int. Cl.: G01N 19/02

(54) **SURFACE FRICTION MEASURING DEVICE**
OBERFLÄCHENREIBUNGSMESSVORRICHTUNG
DISPOSITIF DE MESURE DES FROTTEMENTS DE SURFACE

(30) Priority: 03.11.2004 GB 0424324
(43) Date of publication of application: 01.08.2007
(73) Proprietor: Douglas Equipment Ltd, Cheltenham, Gloucestershire GL51 0AB (GB)
(72) Inventor: BALKWILL, Kenneth, John, Hull HU5 4DE (GB); HOPKINS, Ronald, Frederick, Radstock, Somerset BA3 3RL (GB)
(74) Representative: Stanley, Michael Gordon
(86) International application number: PCT/GB2005/004210
(87) International publication number: WO 2006/048626

(56) References cited:
- US-A- 3 332 276
- US-A- 3 538 742
- US-A- 4 098 111
- US-A- 4 662 211
- US-A- 4 958 512
- US-A1- 2001 006 002
- US-A1- 2004 144 167

## Description

### Field

This invention relates to a method of measuring a drag component during continuous measuring of surface friction and a device for measuring and reporting drag and friction of a surfaces such as a runway, taxiway, or road, and is particularly for use within air ports.

### Background of the Invention

Friction meters for use in measuring the friction of aircraft runways are well known. One well known friction meter is available from Douglas Equipment Ltd under the trade name MU-Meter and comprises a small three wheeled trailer that is towed along the surface to be measured. The meter has a chassis comprises a two main side members pivoted relative to each other at the forward end with each side member supporting a wheel which is biased at a toe-out angle to the direction of travel. The two wheels are biased oppositely to each relative to the direction of travel of the trailer and the friction is related to the force pushing the wheels apart at particular speeds. A third wheel for measuring distance run is supported on another arm pivoted to the chassis. A similar device is disclosed in US-A- 3538 742

The trailer incorporates electronic measuring systems which operate in conjunction with a computer carried in a chosen towing vehicle. The trailer systems produce signals which may be presented on a lap top screen and processed for later downloading . Additionally or alternatively the recorded data can be exported .

Other known runway friction meters are disclosed in GB-1366947 in which a wheel is mounted on a torque coupling which is used to measure the co-efficient of friction of a road or runway as the wheel is run along a runway surface so as to slip. A similar system is disclosed in US 4958 512 in which the forces acting on a braked wheel are measured.

Other known friction measuring devices are shown in US-A-4662 211 and US-A-4098 111 which comprise single wheel devices that can be mounted on a conventional wheeled vehicle. Another known device is disclosed in W00036397 in which a single wheel is run at a bias to the direction of travel and the friction acting between the tread and runway surface is measured and recorded.

A problem with existing surface friction measuring devices is that they do not accurately reflect the friction of a surface covered by a contaminant for example, in extreme weather conditions, a runway may be covered in water, snow, slush, and or ice. In such conditions, the friction measuring meters can give false readings caused by contaminant drag on the friction measuring wheel. This drag force may aid some aircraft landings but it considerably lengthens take-off lengths

The present invention seeks to provide a friction meter which is also capable of recording the drag force exerted by contaminant lying on a surface such as a road or runway.

### Statements of Invention

According to a first aspect of the invention there is provided a continuous friction measuring device comprising a chassis including two main side members pivoted together at the front end thereof each with a respective friction measuring wheel mounted thereon and a load cell extending between the two side members, and a third wheel is mounted on a suspension arm pivoted to the chassis between said two friction measuring wheels , the two friction measuring wheels being in contact with a surface for measuring friction with the third wheel being freely rotatable about its axle during the friction measuring process characterised in that the axle of the third wheel is provided with a load sensor to measure the horizontal drag load on the third wheel due to contaminant on the surface during the friction measuring process and a control unit receives signals from the load cell and load sensor to produce further signals which are passed to a processor to produce drag force readings which are used in conjunction with reference data for a series of known depths of contaminant to define contaminant depth.

Preferably, the load sensor is two axis load cell for measurement of both vertical and horizontal loads acting on the third wheel. The wheel may be mounted on a stub axle which is mounted on the load sensor which may comprise a metal block, e.g. steel, incorporating strain gauges.

The device may further comprise a three axis accelerometer mounted at the centre of gravity of the device.

According to a second aspect of the invention there is provided a method of measuring surface friction in which drag due to contaminant lying on a said surface can be isolated, wherein in said method a trailer comprising a friction measuring device according to the first aspect of the invention , is passed through the contaminant and the horizontal drag on the third wheel is measured simultaneously with a continuous measurement of the friction coefficient of said surface which is provided by the two friction measuring wheels, signals from the load cell and load sensor producing signals used to provide drag force readings which are used in conjunction with reference data, for a series of know depths of contaminant, to define contaminant depth.

The drag readings may be used to define other physical property (for example with snow) through which the trailer may travel. The drag measurement taken on a dry surface and then at different water depths will also allow the textured depth of a runway to be calculated In said method the loads acting on the freely rotating wheel are measured in both horizontal and vertical directions as a load exerted on its axle.

A method of measuring pitch, yaw, and roll may be provided by the installation of a three axes accelerometer which may be installed at the centre of gravity of the trailer to sense the three components of acceleration and angles of inclination.

### Description of the Drawings.

The invention will be described by way of example and with reference to the following drawings in which:
- Fig. 1: is an isometric view of a friction meter according to the present invention in tow behind a vehicle,
- Fig. 2 is: a plan view of the chassis of the friction meter shown in Fig. 1,
- Fig. 3: is a side view of the friction meter chassis,
- Fig. 4: is a plan view of the central wheel suspension arm,
- Fig. 5: is a side view of the suspension arm shown in Fig. 4, and
- Fig.6: is a graph of the friction and drag measurements made by the apparatus according to the present invention.

### Detailed Description of the Invention

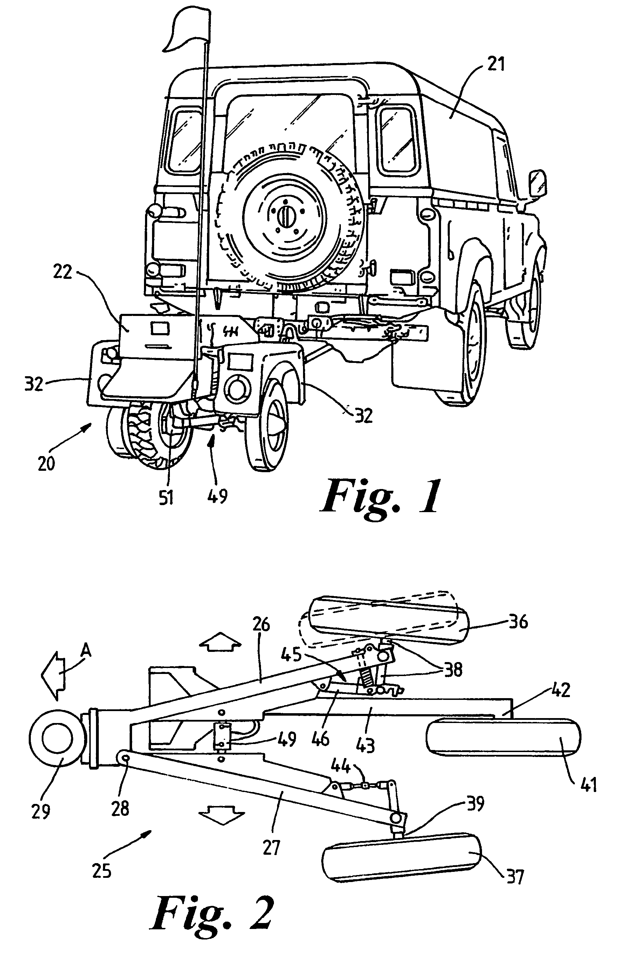

With reference to Fig. 1 there is shown a runway friction meter 20 in the form of a three wheeled trailer which is towed behind a chosen vehicle 21. The friction meter 20 is of the type known as runway continuous friction measuring equipment and incorporates electronic measuring and control systems housed in a central control unit 22 on the top of the trailer which produce signals which are passed to a processor, typically a lap top computer carried in the tow vehicle 21. The friction meter 20 will be described in sufficient detail for an understanding of the present invention.

Referring additionally to Figs 2-5, the trailer 20 comprises a fabricated steel chassis 25 including two main side members 26,27 pivoted together at the front end of the trailer by pivot pin 28. The chassis 25 also includes a top frame 31 which supports the control unit 22 with its cover and mudguards 32. The two mudguards 32 may incorporate ballast weights 36 and a further ballast weight 37 is secured to the top frame 31 behind the control unit 22. The two side members 26 ,27 each have a respective wheel 36,37 mounted thereon via a respective stub axle 38,39 located at the rear end portion of each side member. A rear wheel 41 is mounted on a suspension arm 43 via a respective stub axle 42. The suspension arm 43 is pivoted to the front end portion of the right hand side member 26 by a shaft 50.

The two side member wheels 36,37 are used for friction measuring and both comprise a pneumatic tyre with a smooth tread. The left hand wheel 37 is locked to a pre-set toe out relative to the trailer fore-and-aft centre line by means of an adjuster 44. The right hand wheel 36 is linked to a wheel positioning system 45 which allows castoring between transit and measuring positions. The transit position is shown in broken line. The wheel 36 is castored by means of a lever 46 acting on the stub axle 38. The friction loads acting on the wheels 36,37 are measured by a load cell 49 extending between the two side members 26,27. The rear wheel 41 has a treaded tyre and in use stabilises the trailer and is use for measuring the distance travelled.

A pair of fluid damped shock absorbers 47act between each side member 26,27 and the top frame 31 to absorb road / runway surface shocks. A single non damped spring strut 48 acts between the top frame 31 and the suspension arm 43 to maintain the rear wheel 41 in constant contact with the road surface S. The rear wheel 41 may be lifted when not in use. To this end, an actuator 49, preferably a 12v DC linear actuator, acts between the chassis 25 and the suspension arm 43. The lifting of the wheel is controlled by the control unit 22.

In use, the trailer is towed along a road/runway surface with the two side wheels toed-out at about 7.5 degrees of arc to the direction of travel of the trailer as shown by arrow A. The distance run by the trailer 20 is measured by a distance sensor 51 mounted adjacent the rear wheel 41, for example a photo electric shaft revolution encoder. The surface friction is derived from the load cell 49 which measures the loads acting on the wheels 36,37 tending to push the two wheels 36 and 37 apart. The central control unit 22 receives the information from the sensors 49 & 51 and this is converted to digital and conditioned to give actual friction and distance readings, as is well known in the art.

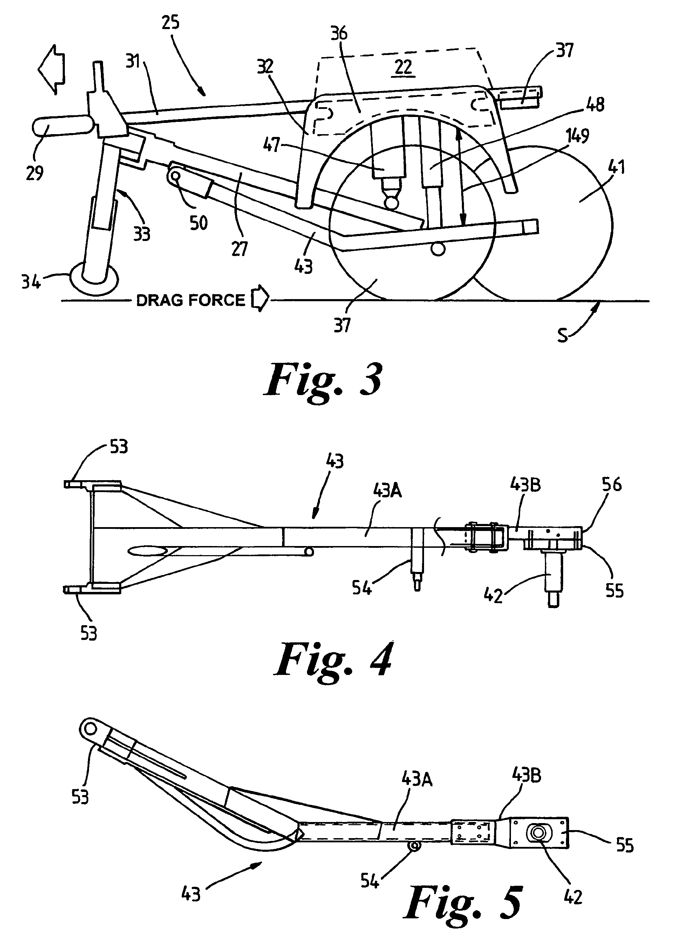

The suspension arm 43 is shown in detail in Fig. 4 and Fir. 5. The front end of the arm 43 has a forked end with a pair of lugs 53 for pivotal attachment to the right hand side member 26. The stub axle 42 is located at the other end of the arm 43 and a suspension stud 54 for attachment of the spring strut 48 is provided at an intermediate location. The suspension arm 43 comprises a front portion 43A extending rearwardly from the forked end to beyond the suspension stud 54, and a rear portion 43B on which the stub axle 42 is mounted and which is a slide fit over the rear end on the front portion 43A. The stub axle 42 is mounted on a two axis load cell 55 which in turn is secured to a block 56 which form part of the rear portion 43A of the arm.

In an alternative arrangement, the arm 43 could comprise a unit construction with the load cell 55 secured directly to the rear end of the one piece arm. The load cell will measure vertical deflections due to surface variation on the road or runway and the horizontal deviations due to drag. The load cell 55 will be connected into the control unit 22 and can be calibrated whilst calibrating the friction measuring sensor 49.

The front end of the chassis 25 is provided with a suitable towing hitch 29 in this example a towing ring but other forms of hitch may be used and a downwardly extending support leg 33 which is removably connected to the front end of the chassis by for example a quick release pin (not shown). A jockey wheel 34 may be mounted on the support leg 33 to assist man handling the trailer 20.

When measuring friction and drag, the trailer 20 is towed along the surface to be measured with the right hand wheel 36 toed out at 7.5 degres of arc and the rear wheel 41 is lowered to contact the ground with the spring strut 48 exerting a sufficient downward load to maintain contact with the road surface S. As the trailer proceeds in measuring mode the friction generated between the side wheel tyres and the runway is measured by the load cell 49, and simultaneously the horizontal and vertical loads acting on the rear wheel 41 are measured by the load cell 55.

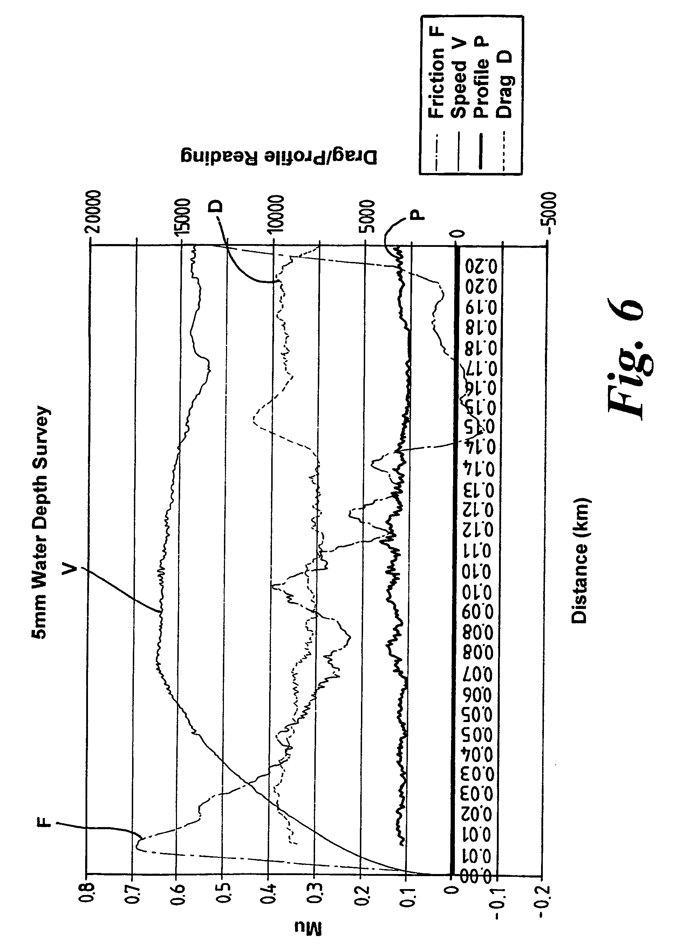

The signals from the sensors 49,51, and 55 are processed by the control unit 22 and a lap top computer in the vehicle 21 to produce a read out chart or graph which is shown in Fig.6. With reference to Fig. 6 there is shown a read out produced by the software in the computer in the vehicle 21 and which has a horizontal axis representing distance run by the vehicle with a vertical axis representing friction, drag and vehicle stability or profile. The curves V represents vehicle speed or velocity, drag D, surface profile P and surface friction F. The test run is measured on an initially dry runway having a 5mm depth of water (contaminant) after a run distance of 150meters. The friction curve shows an increase in friction as the vehicle accelerates up to a selected test speed, for example 65 km/h. The friction falls until the vehicle speed reaches a steady state at about 70 meters and thereafter the friction is a true reading for a damp runway surface until the 5mm standing water is hit at 150m. The friction reading then falls rapidly to less than zero, illustrating that readings are unreliable. The drag curve D is substantially steady up to 150m and begins to climb rapidly once the vehicle hits the 5mm standing water. At the same time the vehicle speed V begins to fall more rapidly after 150m. The profile curve P indicates the change in surface profile to a smooth surface as the wheel beings to aquaplane.

The system can discriminate against speed and water depth for depths of water which increase in 2mm increments up to a maximum of 19mm (3% inch). This maximum depth can be approximately compared with 300mm of snow.

The drag force reading could be used to define the water (or other contaminant) depth or a combination of depth and other physical property (for example with snow) through which the trailer is travelling. The drag measurement taken at different water depths will allow the textured depth of a runway to be calculated.

The algorithm within the software can make corrections for other exterior forces acting on the structure of the measuring device and which are not relevant to the drag calculation.

A three axes accelerometer may be installed at the centre of gravity of the trailer to sense the three components of acceleration and angles of inclination of the trailer to the surface, that is roll, pitch, and yaw.

## Claims

1. A continuous friction measuring device comprising a chassis (25) including two main side members (26,27) pivoted together at the front end thereof each with a respective friction measuring wheel (36,37) mounted thereon and a load cell (49) extending between the two side members (26, 37), and further comprising a third wheel (41) mounted on a suspension arm (43) pivoted to the chassis (25) between said two friction measuring wheels (36,37), the two friction measuring wheels (36,37) being in contact with a surface for measuring friction whereby the third wheel (41) is also in contact with the surface and is freely rotatable about its axle (42) during the friction measuring process, **characterised in that** the axle (42) of the third wheel (41) is provided with a load sensor (55) to measure the horizontal drag load on the third wheel due to contaminant on the surface during the friction measuring process and a control unit 22 receives signals from the load cell (49) and load sensor (55) to produce further signal which are passed to a processor to produce drag force readings which are used in conjunction with reference data for a series of known depths of contaminant to define contaminant depth.

2. A device as claimed in Claim 1 wherein the load cell (55) is a two axis load cell for measurement of both vertical and horizontal loads acting on the third wheel (41).

3. A device as claimed in claim 1 or Claim 2 wherein the third wheel (41) is rotatably mounted on a stub axle (42) which is mounted on a load sensor (55).

4. A device as claimed in Claim 3 wherein the load sensor (55) comprises a metal block incorporating strain gauges

5. A device as claimed in any one of Claims 1 to 4 and further comprising a three axis accelerometer mounted at the centre of gravity of the device.

6. A method of measuring surface friction in which drag due to contaminant lying on a said surface can be isolated, wherein in said method a trailer comprising a friction measuring device as claimed in any one of Claims 1 to 5 is passed through the contaminant and the horizontal drag on the third wheel (41) is measured simultaneously with a continuous measurement of the friction coefficient of said surface which is provided by the two friction measuring wheels (36,37), the load cell (49) and load sensor (55) producing signals used to provide drag force readings which are used in conjunction with reference data, for a series of know depths of contaminant, to define contaminant depth.

7. A method according to Claim 6, wherein the loads acting on the freely rotating wheel (41) are measured in both horizontal and vertical directions.

8. A method as claimed in Claim 6 or Claim 7, wherein loads acting on the third wheel (41) are measured as a load exerted on the wheel axle (42).

9. A method as claimed in Claim 8, wherein the drag force measurement taken on a dry surface and then at different water depths provide for the textured depth of a runway to be calculated

10. A method as claimed in one of Claims 6 to 9, wherein the three components of acceleration and the angle of inclination of the trailer are measured at the centre of gravity thereof to provide a measure of pitch, yaw, and roll of said trailer or vehicle.

## Patentansprüche

1. Vorrichtung zur kontinuierlichen Reibungsmessung, die ein Fahrgestell (25) umfasst, das zwei Haupt-Längsträger (26, 27), die am vorderen Ende derselben gelenkig miteinander verbunden sind, jeder mit einem an demselben angebrachten jeweiligen Reibungsmessungsrad (36, 37) und eine Kraftmessdose (49), die sich zwischen den zwei Längsträgern (26, 27) erstreckt, einschließt, und die ferner ein drittes Rad (41) umfasst, das an einem gelenkig mit dem Fahrgestell (25) verbundenen Aufhängungsarm (43) zwischen den zwei Reibungsmessungsrädern (36, 37) angebracht ist, wobei sich die zwei Reibungsmessungsräder (36, 37) in Berührung mit einer Oberfläche befinden, um die Reibung zu messen, wodurch sich das dritte Rad (41) ebenfalls in Berührung mit der Oberfläche befindet und während des Reibungsmessungsvorgangs frei um seine Achse (42) gedreht werden kann, **dadurch gekennzeichnet, dass** die Achse (42) des dritten Rades (41) mit einem Lastsensor (55) versehen ist, um während des Reibungsmessungsvorgangs die horizontale Widerstandslast an dem dritten Rad auf Grund einer Verunreinigung auf der Oberfläche zu messen, und eine Steuerungseinheit (22) Signale von der Kraftmessdose (49) und dem Lastsensor (55) empfängt, um weitere Signale zu erzeugen, die an einen Prozessor weitergeleitet werden, um Widerstandskraft-Angaben zu erzeugen, die in Verbindung mit Referenzdaten für eine Reihe von bekannten Tiefen der Verunreinigung dazu verwendet werden, die Verunreinigungstiefe zu definieren.

2. Vorrichtung nach Anspruch 1, wobei der Lastsensor (55) eine zweiachsige Kraftmessdose zur Messung von sowohl vertikalen als auch horizontalen Lasten, die auf das dritte Rad (41) einwirken, ist.

3. Vorrichtung nach Anspruch 1 oder Anspruch 2, wobei das dritte Rad (41) drehbar an einem Achsschenkel (42) angebracht ist, der an einem Lastsensor (55) angebracht ist.

4. Vorrichtung nach Anspruch 3, wobei der Lastsensor (55) einen Metallblock umfasst, der Dehnungsmessgeräte einschließt.

5. Vorrichtung nach einem der Ansprüche 1 bis 4 und die ferner einen dreiachsigen Beschleunigungsmesser umfasst, der an dem Schwerpunkt der Vorrichtung angebracht ist.

6. Verfahren zur Messung der Oberflächenreibung, bei der ein Widerstand auf Grund einer auf der Oberfläche liegenden Verunreinigung isoliert werden kann, wobei bei diesem Verfahren ein Anhänger, der eine Reibungsmessungsvorrichtung nach einem der Ansprüche 1 bis 5 umfasst, durch die Verunreinigung geführt wird und der Widerstand des dritten Rades (41) gleichzeitig mit einer durch die zwei Reibungsmessungsräder (36, 37) bereitgestellten kontinuierlichen Messung des Reibungskoeffizienten der Oberfläche gemessen wird, wobei die Kraftmessdose (49) und der Lastsensor (55) Signale erzeugen, die dazu verwendet werden, Widerstandskraft-Angaben zu erzeugen, die in Verbindung mit Referenzdaten, für eine Reihe von bekannten Tiefen der Verunreinigung, dazu verwendet werden, die Verunreinigungstiefe zu definieren.

7. Verfahren nach Anspruch 6, wobei die auf das sich frei drehende Rad (41) einwirkenden Lasten sowohl in der vertikalen als auch in der horizontalen Richtung gemessen werden.

8. Verfahren nach Anspruch 6 oder Anspruch 7, wobei die auf das dritte Rad (41) einwirkenden Lasten als eine auf die Radachse (42) ausgeübte Last gemessen werden.

9. Verfahren nach Anspruch 8, wobei die auf einer trockenen Oberfläche und danach bei unterschiedlichen Wassertiefen vorgenommenen Widerstandskraftmessungen gewährleisten, dass die texturierte Tiefe einer Start- und Landebahn berechnet wird.

10. Verfahren nach einem der Ansprüche 6 bis 9, wobei die drei Komponenten der Beschleunigung und der Neigungswinkel des Anhängers an dem Schwerpunkt desselben gemessen werden, um ein Maß des Nickens, des Gierens und des Rollens des Anhängers oder Fahrzeugs bereitzustellen.

## Revendications

1. Dispositif de mesure continue du frottement, comprenant un châssis (25) englobant deux éléments latéraux principaux (26, 27), pivotés l'un vers l'autre au niveau de l'extrémité correspondante de celui-ci, comportant chacun une roue de mesure du frottement respective (36, 37) qui y est montée, et une cellule dynamométrique (49), s'étendant entre les deux éléments latéraux (26, 27), et comprenant en outre une troisième roue (41), montée sur un bras de suspension (43) pivoté par rapport au châssis (25) entre les deux dites roues de mesure du frottement (36, 37), les deux roues de mesure du frottement (36, 37) étant en contact avec une surface pour mesurer le frottement, la troisième roue (41) étant ainsi également en contact avec la surface et pouvant tourner librement sur son essieu (42) au cours du processus de mesure du frottement, **caractérisé en ce que** l'essieu (42) de la troisième roue (41) comporte un capteur de charge (55) pour mesurer la charge de traînée horizontale exercée sur la troisième roue par suite de la présence de contaminants sur la surface au cours du processus de mesure du frottement, une unité de commande (22) recevant des signaux de la cellule dynamométrique (49) et du capteur de charge (55) afin de générer des signaux additionnels transmis vers un processeur pour fournir des informations sur la force de traînée, utilisées en combinaison avec des données de référence pour une série de profondeurs connues des contaminants afin de définir la profondeur des contaminants.

2. Dispositif selon la revendication 1, dans lequel le capteur de charge (55) est une cellule dynamométrique à deux axes pour la mesure des charges verticale et horizontale exercées sur la troisième roue (41).

3. Dispositif selon les revendications 1 ou 2, dans lequel la troisième roue (41) est montée de manière rotative sur un demi-essieu (42) monté sur un capteur de charge (55).

4. Dispositif selon la revendication 3, dans lequel le capteur de charge (55) comprend un bloc métallique incorporant des jauges de contrainte.

5. Dispositif selon l'une quelconque des revendications 1 à 4, comprenant en outre un accéléromètre à trois axes monté au niveau du centre de gravité du dispositif.

6. Procédé de mesure du frottement de surface, dans lequel la traînée due aux contaminants présents sur une dite surface peut être isolée, une remorque comprenant un dispositif de mesure du frottement selon l'une quelconque des revendications 1 à 5 étant passée dans le cadre dudit procédé à travers les contaminants, la traînée horizontale exercée sur la troisième roue (41) étant mesurée de manière simultanée à une mesure continue du coefficient de frottement de ladite surface, assurée par les deux roues de mesure du frottement (36, 37), la cellule dynamométrique (49) et le capteur de charge (55) générant des signaux utilisés pour fournir des informations sur la force de traînée, utilisées en combinaison avec des données de référence, pour une série de profondeurs connues des contaminants, pour définir une profondeur des contaminants.

7. Procédé selon la revendication 6, dans lequel les charges agissant sur la roue à rotation libre (41) sont mesurées dans les directions horizontale et verticale.

8. Procédé selon les revendications 6 ou 7, dans lequel les charges agissant sur la troisième roue (41) sont mesurées sous forme d'une charge exercée sur l'essieu de la roue (42).

9. Procédé selon la revendication 8, dans lequel la mesure de la force de traînée effectuée sur une surface sèche, et ensuite au niveau de différentes profondeurs d'eau, permet de déterminer la profondeur texturée d'une piste devant être calculée.

10. Procédé selon l'une des revendications 6 à 9, dans lequel les trois composantes de l'accélération et de l'angle d'inclinaison de la remorque sont mesurées au niveau de son centre de gravité pour fournir une mesure du tangage, du lacet et du roulis de ladite remorque ou du véhicule.
